# EUROPÄISCHE PATENTSCHRIFT

(11) **EP 2 342 473 B1**
(45) Veröffentlichungstag und Bekanntmachung des Hinweises auf die Patenterteilung: **27.03.2013**
(21) Anmeldenummer: 09760478.9
(22) Anmeldetag: 05.11.2009
(51) Int. Cl.: F16D 65/14, F16D 65/00, B60T 17/08

(54) **SATTELSCHEIBENBREMSE, INSBESONDERE FÜR NUTZFAHRZEUGE, SOWIE SATTEL UND BETÄTIGUNGSEINRICHTUNG EINER SOLCHEN BREMSE**
CALIPER DISK BRAKE, IN PARTICULAR FOR COMMERCIAL VEHICLES, A CALIPER AND AN OPERATING DEVICE FOR SUCH A BRAKE
FREIN A DISQUE A ETRIER NOTAMMENT DESTINE A DES VEHICULES UTILITAIRES, ET ETRIER ET DISPOSITIF D'ACTIONNEMENT POUR UN TEL FREIN

(30) Priorität: 05.11.2008 DE 102008055860
(43) Veröffentlichungstag der Anmeldung: 13.07.2011
(73) Patentinhaber: Wabco Radbremsen GmbH, 68229 Mannheim (DE)
(72) Erfinder: KLOOS, Eugen, 64625 Bensheim (DE); FALTER, Wolfgang, 69118 Heidelberg (DE); RICHTER, Andreas, 30900 Wedemark (DE)
(74) Vertreter: Leinweber & Zimmermann
(86) Internationale Anmeldenummer: PCT/EP2009/007935
(87) Internationale Veröffentlichungsnummer: WO 2010/051997

(56) Entgegenhaltungen:
- WO-A1-02/073058
- DE-A1- 19 619 488
- DE-A1- 19 961 645

## Beschreibung

Die Erfindung betrifft eine Sattelscheibenbremse, insbesondere für Nutzfahrzeuge, mit
einem Sattel, der eine erste Flanschfläche mit einer ersten Funktionsöffnung aufweist,
einer Betätigungseinrichtung, die eine zweite Flanschfläche mit einer in montiertem Zustand mit der ersten Funktionsöffnung fluchtenden zweiten Funktionsöffnung aufweist und
einer Befestigungseinrichtung zum Befestigen der Betätigungseinrichtung an dem Sattel, wobei
die Funktionsöffnungen der Kopplung der Betätigungseinrichtung mit einer Zuspanneinrichtung dienen. Die Zuspanneinrichtung liegt in der Regel im Sattel.

Sattelscheibenbremsen der oben genannten Art sind bekannt. Dabei handelt es sich bei der Betätigungseinrichtung insbesondere im Falle von Nutzfahrzeugscheibenbremsen um druckluftbetätigte Bremszylinder mit oder ohne Federspeicher, Doppelmembranzylinder oder elektromechanische Betätigungseinrichtungen.

In letzter Zeit hat sich am Markt ein Befestigungsstandard durchgesetzt, der insbesondere die Ausführung/Form der Flanschkontur/-fläche einerseits am Bremssattel und andererseits am Boden der Betätigungseinrichtung festlegt. Dieser Standard soll gewährleisten, daß Betätigungseinrichtungen unterschiedlicher Hersteller an ein und dieselbe Scheibenbremse passen bzw. daß eine Betätigungseinrichtung an unterschiedliche Scheibenbremsen paßt.

Bei herkömmlichen Betätigungsvorrichtungen sind zwei aus der Befestigungseinrichtung vorstehende Befestigungsbolzen (Schrauben) vorgesehen, die in Flanschöffnungen an dem Sattel eingesteckt und mit Muttern verschraubt werden, wobei das zugehörige Drehmoment üblicherweise vorgeschrieben ist. Im Bereich der Funktionsöffnungen befindet sich dabei eine elastische Ringraumdichtung, die in montiertem Zustand die Innenräume des Sattels sowie der Betätigungseinrichtung gegen das Eindringen von beispielsweise Schmutz und Feuchtigkeit schützt.

Bei den bekannten Sattelscheibenbremsen ist die Außenkontur der zweiten Flanschfläche quasi augenförmig, mit der zweiten Funktionsöffnung in der Mitte. Global läßt sich die Kontur als rechteckig bzw. elliptisch bezeichnen. Sie ist länger als hoch.

Bremssättel werden in der Regel aus hochfesten Guß- oder Stahlteilen hergestellt. Dabei wird die erste Flanschfläche mittels geeigneter Bearbeitung eben/flach ausgeführt.

Das Gehäuse der Betätigungseinrichtung ist wenigstens im Bodenteil, d.h. dort, wo die zweite Flanschfläche liegt, als Tiefziehteil aus Blech entsprechender Wandstärke ausgeführt. Häufig sind die aus dem Bodenteil herausragenden Befestigungsbolzen (Schrauben) im Bodenteil befestigt, beispielsweise form- und oder stoffschlüssig.

In jedem Fall weist der die erste Flanschfläche tragende Teil des Bremssattels eine größere Materialsteifigkeit als der Bodenteil der Betätigungseinrichtung auf. Auch ist wegen der oben beschriebenen Bearbeitung die erste Flanschfläche ebener als die zweite Flanschfläche.

Wird bei herkömmlichen Sattelscheibenbremsen die Betätigungseinrichtung an dem Bremssattel angesetzt und dort wie oben beschrieben verschraubt, kann es durch Unebenheiten im Flanschbereich der Betätigungseinrichtung bei der Kontaktanlage oder durch das Setzverhalten der Befestigungsbolzen zu einem Verziehen des Blechteils kommen, was zu einer Spaltbildung im oberen und unteren Flanschbereich führt. Mit anderen Worten: Die eigentlich wünschenswerte Vorspannung auf der gesamten Kontaktfläche fehlt, denn sie besteht nur im Bereich der Verschraubungen. Kommt es jetzt im Fahreinsatz beispielsweise wegen Fahrbahnunebenheiten oder Schlechtwegstrecken zu starken Beschleunigungen der vergleichsweise schweren Betätigungseinrichtung, so federt diese in die Spalten ein. Wegen der fehlenden Abstützung bei verringertem Gegenmoment (minimierter Hebel) treten infolge der schlagartigen Stöße hier Materialdeformierungen auf, so daß Materialbrüche nicht ausgeschlossen sind und es zum Totalausfall der Bremse kommen kann.

Die DE 196 19488 offenbart eine Sattelscheibenbremse gemäβ dem Oberbegriff des Anspruchs 1.

Der Erfindung liegt die Aufgabe zugrunde, die Scheibenbremse der eingangs genannten Art derart weiterzubilden, daß nachteilige Einflüsse auf die Zuverlässigkeit der Betätigungseinrichtung und der Scheibenbremse verringert oder sogar ausgeschlossen sind, insbesondere ihre Schlechtwegtauglichkeit verbessert ist.

Die obige Aufgabe wird durch eine Sattelscheibenbremse gemäβ Anspruch 1 gelöst.

Mit anderen Worten wird die elastische Rückstellkraft beispielsweise des Bodenteils der Befestigungseinrichtung genutzt, um Verformungen oder dergleichen entweder zu unterbinden oder zu kompensieren, so daß es nicht zu der oben beschriebenen Bildung von Spalten kommt.

Erfindungsgemäß kann die Befestigungseinrichtung prinzipiell beliebig ausgestaltet sein. Bevorzugt weist sie eine Schraube und/oder eine Mutterschraube auf, insbesondere zwei Schrauben und zwei Muttern.

Erfindungsgemäß bevorzugt sind zwei Befestigungseinrichtungen vorgesehen, die auf einer Linie mit und symmetrisch zu der ersten und/oder der zweiten Funktionsöffnung liegen.

An dieser Stelle sei ausdrücklich darauf hingewiesen, daß die Erfindung nicht auf Sattelscheibenbremsen beschränkt ist, bei denen die Betätigungseinrichtung unmittelbar an dem Sattel befestigt ist. Vielmehr kann nach der Erfindung auch eine zwischen dem Sattel und der Betätigungseinrichtung liegende Zwischeneinrichtung vorgesehen sein, die eine dritte Flanschfläche aufweist.

Ein Beispiel für eine solche Zwischeneinrichtung ist ein Gehäuse einer elektromechanischen Feststellbremse.

Um das erfindungsgemäß vorgesehene Verbiegen der zweiten Flanschfläche gegen die elastische Rückstellkraft zu erzielen, kann vorgesehen sein, daß die erste, die zweite und/oder die dritte Flanschfläche(n) zwischen der Befestigungseinrichtung und den Funktionsöffnungen nicht eben ist/sind.

So kann beispielsweise vorgesehen sein, daß die erste, die zweite und/oder die dritte Flanschfläche eine Stufe zwischen der Befestigungseinrichtung und den Funktionsöffnungen aufweist/aufweisen.

Zusätzlich oder alternativ kann erfindungsgemäß aber auch eine Einlage zwischen zwei benachbarten Flanschflächen vorgesehen sein, die sich zwischen den Funktionsöffnungen und der Befestigungseinrichtung erstreckt, jedoch mit Abstand von der Befestigungseinrichtung angeordnet ist.

Erfindungsgemäß weiter bevorzugt ist eine Dichteinrichtung zum Abdichten der ersten und/oder der zweiten Funktionsöffnung vorgesehen.

Nach einer besonders bevorzugten Ausführungsform der Erfindung sind zwei oder mehr Befestigungseinrichtungen zum Befestigen der Betätigungseinrichtung vorgesehen. Dabei kann erfindungsgemäß weiter bevorzugt die zweite Funktionsöffnung in der Mitte zwischen zwei Befestigungseinrichtungen liegen. Dies entspricht der herkömmlichen Ausgestaltung der Befestigung.

Erfindungsgemäß kann die Betätigungseinrichtung prinzipiell in beliebiger Orientierung an dem Sattel befestigt sein. Erfindungsgemäß bevorzugt ist die Betätigungseinrichtung jedoch in Axial- oder in Radiallage bezüglich der Bremsscheibe angeordnet.

Nach einer weiter bevorzugten Ausführungsform der Erfindung ist zumindest der in montiertem Zustand gegen eine elastische Rückstellkraft verbogene Teil der Betätigungseinrichtung ein Tiefziehteil aus Blech.

Neben der oben beschriebenen Sattelscheibenbremse schafft die Erfindung auch einen Sattel einer Bremse gemäβ Anspruch 14 sowie ein Betätigungseinrichtung einer Bremse gemäβ Anspruch 15.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine schematische perspektivische Ansicht eines Bremssattels nach einem Ausführungsbeispiel der Erfindung,
- Figur 2: eine schematische Axialansicht einer zugehörigen Betätigungseinrichtung,
- Figur 3: eine schematische Schnittansicht des Sattels mit daran angebrachter, jedoch noch nicht verschraubter Betätigungseinrichtung,
- die Figuren 4, 5 und 6: die gleichen Ansichten wie die Figuren 1, 2 und 3, jedoch von einem anderen Ausführungsbeispiel, und
- die Figuren 7 und 8: die gleichen Ansichten wie die Figuren 2 und 3, jedoch von einem dritten Ausführungsbeispiel.

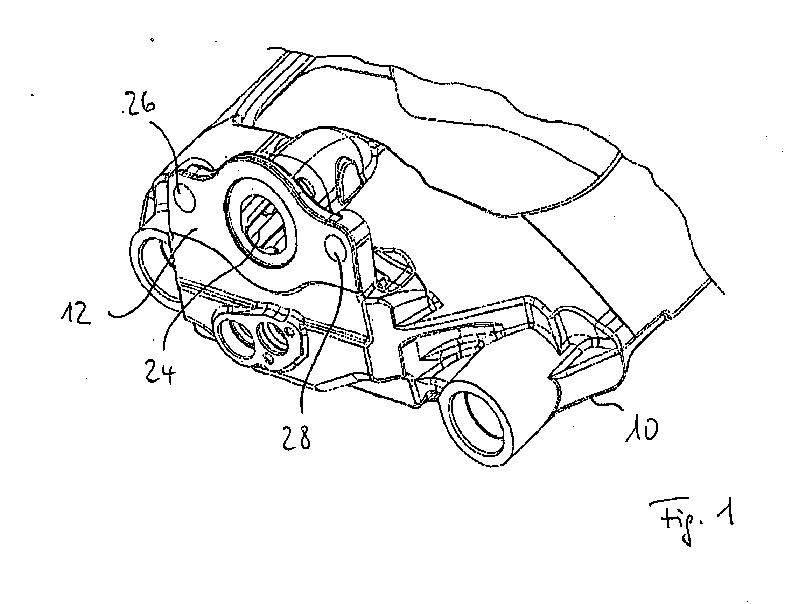

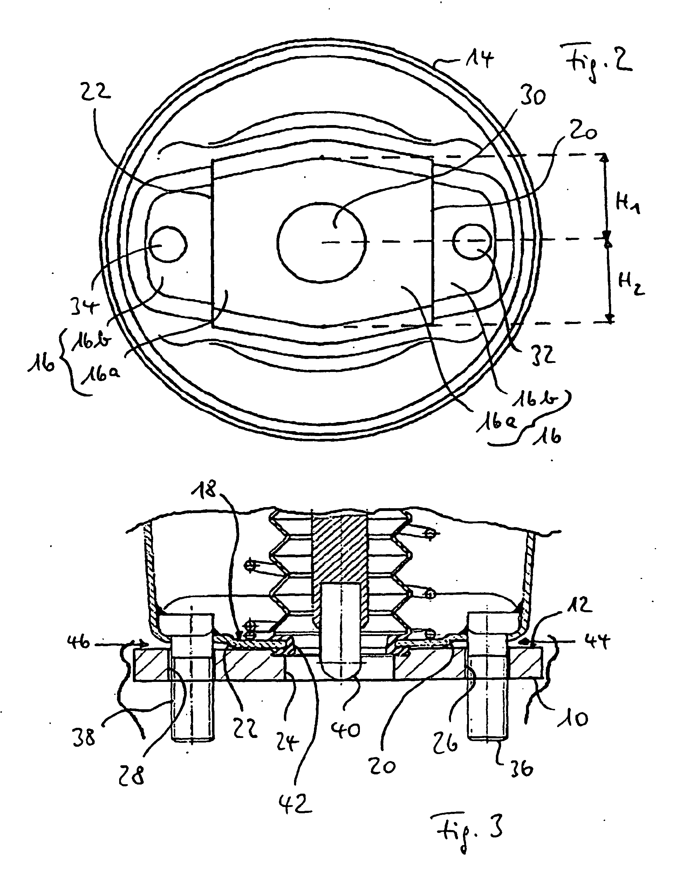

Zu dem Ausführungsbeispiel nach den Figuren 1 bis 3 gehört ein Sattel 10 mit einer Flanschfläche 12. Ferner gehört dazu eine Betätigungseinrichtung 14 mit einer Flanschfläche 16. Die Betätigungseinrichtung 14 ist beispielsweise in Form eines druckluftbetätigten Bremszylinders mit/ohne Federspeicher ausgeführt. Es kann aber auch ein Doppelmembranzylinder verwendet werden. Ein weiteres Beispiel ist eine elektromechanisch ausgestaltete Betätigungseinrichtung. Die Flanschfläche 16 hat zwei Abschnitte 16a und 16b. Sie sind an dem Boden 18 der Betätigungseinrichtung 14 ausgebildet. Wie insbesondere Figur 3 zu entnehmen ist, steht der Abschnitt 16a der Flanschfläche 16 über den Abschnitt 16b hervor, so daß dazwischen zwei Stufen 20, 22 ausgebildet sind.

Der Sattel 10 weist eine Funktionsöffnung 24 sowie zwei Befestigungsöffnungen 26, 28 auf. Dementsprechend weist auch die Betätigungseinrichtung 14 eine Funktionsöffnung 30 sowie zwei Befestigungsöffnungen 32 und 34 auf, aus denen jeweils ein Befestigungsbolzen 36, 38 herausragt. Die Befestigungsbolzen 36, 38 sind an der Betätigungseinrichtung 14 befestigt. Vorzugsweise liegen die Funktionsöffnungen 24, 30 und die Befestigungsöffnungen 32, 34 auf einer Linie und symmetrisch zu einer Symmetrieachse durch die Funktionsöffnungen 24, 30.

In montiertem Zustand verstrecken sich Befestigungsbolzen (Schrauben) 36, 38 durch miteinander fluchtende Befestigungsöffnungen 32, 26 bzw. 34, 28. In gleicher Weise erstreckt sich in montiertem Zustand ein Betätigungsglied (Stößel) 40 durch die miteinander fluchtenden Funktionsöffnungen 30, 24. Das Betätigungsglied 40 ist in montiertem Zustand mit einer (nicht gezeigten) Zuspanneinrichtung im Inneren des Sattels 10 gekoppelt. Zur Abdichtung der beiden Funktionsöffnungen 24, 30 dient eine Ringdichtung 42.

Figur 3 zeigt schematisch den Sattel 10 mit daran angesetzter Betätigungseinrichtung 14 vor dem Verschrauben. Zum Verschrauben werden in der Zeichnung nicht dargestellte Mutterschrauben auf die Befestigungsbolzen 36, 38 aufgeschraubt. Die Muttern liegen somit auf der Rückseite der Flanschfläche 12. Werden daraufhin die Verschraubungen angezogen, so verbiegt sich die Flanschfläche 16a, 16b in dem zwischen den Befestigungsbolzen 36, 38 einerseits und der Funktionsöffnung 30 andererseits liegenden Bereich, weil sich der in Figur 3 gezeigte Spalt 44 bzw. 46 schließt. Da das Verbiegen elastisch erfolgt, wirkt eine entsprechende Rückstellkraft auf die Flanschfläche 16, die die Flanschfläche 16 in Richtung auf die Flanschfläche 12 vorspannt.

Mit anderen Worten ist eine vollflächige Kraftverschraubung hergestellt. Die oben genannten nachteiligen Spaltbildungen im verschraubten Zustand sind vermieden. Dadurch wird gegenüber der nachteiligen linienförmigen Anlagefläche herkömmlicher Bremsen eine kreuzförmige Anlagefläche erzeugt. Die Vollflächigkeit unter elastischer Materialvorspannung aus der Deformierung sichert somit auch in radialer Sicht ein maximales Gegenmoment mit einem großen Hebel ab. Damit ist die Schlechtwegtauglichkeit erheblich verbessert. Die Hebelwirkung ist in Figur 2 durch die Bezugszeichen H₁ und H₂ angedeutet.

Um die Möglichkeit einer elastischen Verbiegung des Bodens 18 der Betätigungseinrichtung 14 zu gewährleisten, ist in dem dargestellten Ausführungsbeispiel der genannte Boden 18 aus Tiefziehblech hergestellt.

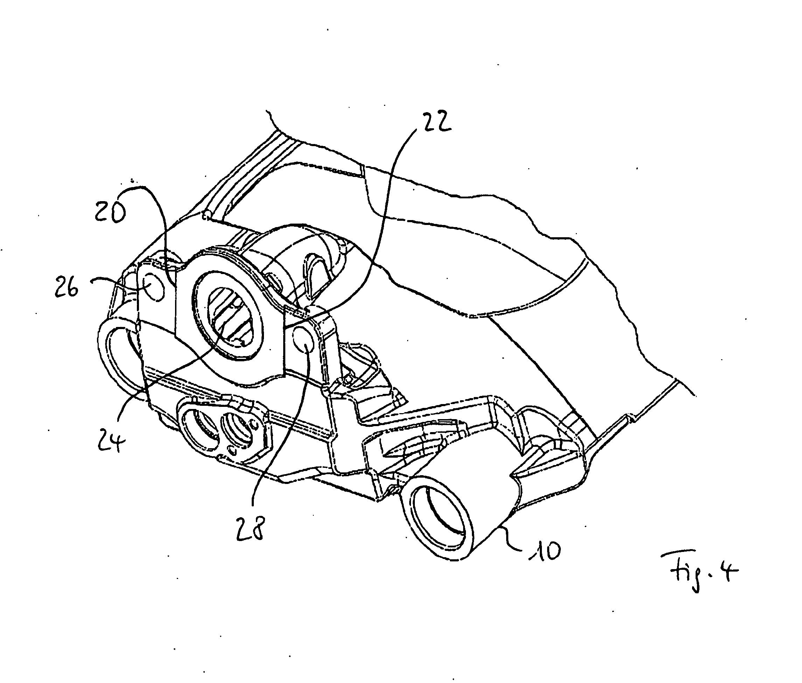

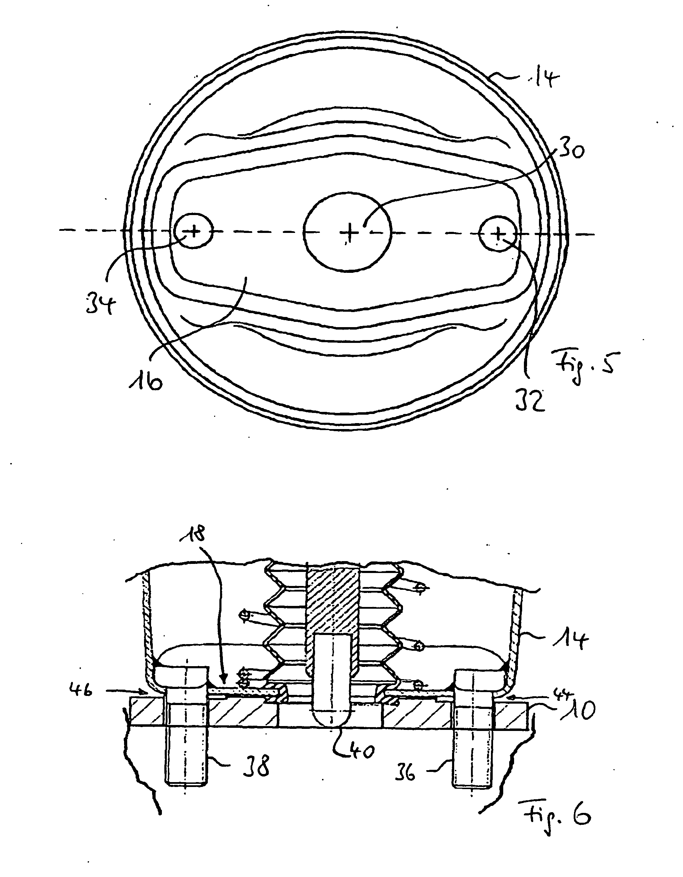

Die Ausgestaltung nach den Figuren 4 bis 6 entspricht im wesenttichen derjenigen nach den Figuren 1 bis 3, wobei allerdings nicht die Flanschfläche 16 des Bodens 18 der Betätigungseinrichtung 14 mit einer vorspringenden Stufe versehen ist, sondern vielmehr die Flanschfläche 12 des Sattels 10.

Auch bei dieser Ausgestaltung wird mit Anziehen der Verschraubung der beiden Befestigungsbolzen 36, 38 ein Biegemoment erzeugt, wobei die daraus resultierende elastische Rückstellkraft die Flanschfläche 16 zumindest abschnittweise in Richtung auf die Flanschfläche 12 vorspannt.

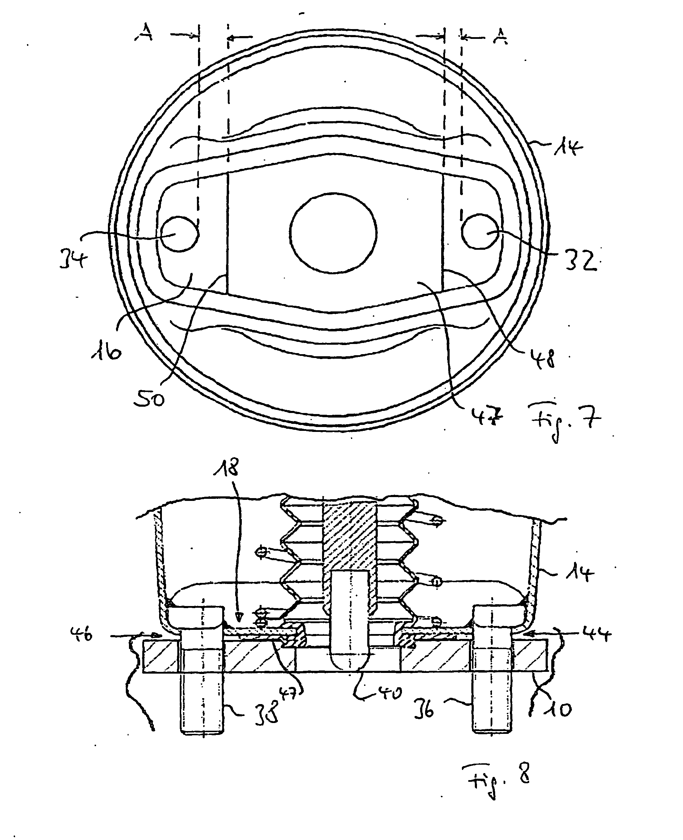

Eine dritte Ausgestaltung zeigen die Figuren 7 und 8. Der Sattel 10 ist dabei entsprechend Figur 1 ausgestaltet. Danach sind die Flanschflächen 12 und 16 (wie bei herkömmlichen Bremsen) eben. Dazwischen liegt aber eine Einlage 47, deren äußere Ränder 48, 50 mit einem Abstand A von den Befestigungsbolzen 36, 38 bzw. von den Befestigungsöffnungen 32, 34 angeordnet sind. Die Ränder 48, 50 haben die gleiche Funktion wie die Stufen 20, 22. Wiederum wird bei Anziehen der Verschraubungen mittels der Steifigkeit des Einlageteils 47 ein Biegemoment erzeugt, wobei die darauf zurückgehende elastische Rückstellkraft die Flanschfläche 16 gegen die Flanschfläche 12 vorspannt. Die Einlage 47 kann dabei lose eingelegt oder direkt an der Flanschfläche 12 des Sattels 10 und/oder an der Flanschfläche 16 der Betätigungseinrichtung 14 befestigt sein.

Anstelle durch einen Formschluß oder Stoffschluß können die Bolzen 36, 38 wegen der elastischen Rückstellkraft auch nur durch einfachen Reibschluß beim Montieren gegen Mitdrehen gesichert sein.

## Patentansprüche

1. Sattelscheibenbremse, insbesondere für Nutzfahrzeuge, mit
einem Sattel (10), der eine erste Flanschfläche (12) mit einer ersten Funktionsöffnung (24) aufweist,
einer Betätigungseinrichtung (14), die eine zweite Flanschfläche (16) mit einer im montierten Zustand mit der ersten Funktionsöffnung fluchtenden zweiten Funktionsöffnung (30) aufweist, und
einer Befestigungseinrichtung (36, 38) zum Befestigen der Betätigungseinrichtung an dem Sattel, wobei
die Funktionsöffnungen (24, 30) der Kopplung der Betätigungseinrichtung mit einer Zuspanneinrichtung dienen,
**dadurch gekennzeichnet, daß**
die Befestigungseinrichtung dazu ausgelegt ist, die zweite Flanschfläche (26) in einem zwischen der zweiten Funktionsöffnung (30) und der Befestigungseinrichtung (36, 38) liegenden Bereich gegen eine elastische Rückstellkraft zu verbiegen bzw. zu verformen, und die Rückstellkraft die zweite Flanschfläche (16) zumindest abschnittweise in Richtung auf die erste Flanschfläche (12) vorspannt.

2. Bremse nach Anspruch 1, **dadurch gekennzeichnet, daß** die Befestigungseinrichtung (36, 38) eine Schraube aufweist.

3. Bremse nach Anspruch 1 oder 2, **dadurch gekennzeichnet, daß** die Befestigungseinrichtung eine Mutterschraube aufweist.

4. Bremse nach einem der vorangehenden Ansprüche, **gekennzeichnet durch** zwei Befestigungseinrichtungen (36, 38), die auf einer Linie mit und symmetrisch zu der ersten und/oder der zweiten Funktionsöffnung (24, 30) liegen.

5. Bremse nach einem der vorangehenden Ansprüche, **gekennzeichnet durch** eine zwischen dem Sattel (10) und der Betätigungseinrichtung (14) liegende Zwischeneinrichtung, die eine dritte Flanschfläche aufweist.

6. Bremse nach einem der vorangehenden Ansprüche, **dadurch gekennzeichnet, daß** die erste, die zweite und/oder die dritte Flanschfläche(n) (12, 16) zwischen der Befestigungseinrichtung (36, 38) und den Funktionsöffnungen (24, 30) nicht eben ist/sind.

7. Bremse nach Anspruch 6, **dadurch gekennzeichnet, daß** die erste, die zweite und/oder die dritte Flanschfläche (12, 16) eine Stufe (20, 22) zwischen der Befestigungseinrichtung (36, 38) und den Funktionsöffnungen (24, 30) aufweist/aufweisen.

8. Bremse nach einem der vorangehenden Ansprüche, **gekennzeichnet durch** eine Einlage (47) zwischen zwei benachbarten Flanschflächen (12, 16), die sich zwischen den Funktionsöffnungen (24, 30) und der Befestigungseinrichtung (36, 38) erstreckt, jedoch mit Abstand (A) von der Befestigungseinrichtung angeordnet ist.

9. Bremse nach einem der vorangehenden Ansprüche, **gekennzeichnet durch** eine Dichteinrichtung (42) zum Abdichten der ersten und/oder der zweiten Funktionsöffnung (24, 30).

10. Bremse nach einem der vorangehenden Ansprüche, **gekennzeichnet durch** zwei oder mehr Befestigungseinrichtungen (36, 38).

11. Bremse nach Anspruch 10, **dadurch gekennzeichnet, daß** die zweite Funktionsöffnung (30) in der Mitte zwischen zwei Befestigungseinrichtungen (36, 38) liegt.

12. Bremse nach einem der vorangehenden Ansprüche, **dadurch gekennzeichnet, daß** die Betätigungseinrichtung (14) in Axial- oder in Radiallage bezüglich der Bremsscheibe angeordnet ist.

13. Bremse nach einem der vorangehenden Ansprüche, **dadurch gekennzeichnet, daß** zumindest der in montiertem Zustand gegen eine elastische Rückstellkraft verbogene Teil (18) der Betätigungseinrichtung (14) ein Tiefziehteil aus Blech ist.

14. Sattel einer Bremse mit einer ersten Flanschfläche (12) zwischen Befestigungsöffnungen (26, 28) und einer Funktionsöffnung (24) des Sattels, die nicht eben und derart gestaltet ist, dass eine Flanchfläche (16) einer Betätigungseinrichtung bei Befestigung der Betätigungseinrichtung an den Sattel in einem zwischen einer Funktionsöffnung (30) der Betätigungs-einrichtung und den Befestigungsöffnungen liegenden Bereich gegen eine elastische Rüchstellkraft verbogen bzw. verformt und durch die Rückstellkraft zumindest abschnittweise in Richtung auf die Flanschfläche (16) der Betätigungseinrichtung vorgespannt wird.

15. Betätigungseinrichtung einer Bremse mit Befestigungseinrichtung, **dadurch gekennzeichnet, dass** eine Flanschfläche (16) der Betätigungseinrichtung zwischen einer Funktionsöffnung (30) Betätigungseinrichtung und der Befestigungseinrichtung (36, 38) nicht eben und derart gestaltet ist, dass sie bei Befestigung der Betätigungseinrichtung an einem Sattel (10) in einem zwischen der Funktionsöffnung (30) und der Befestigungseinrichtung liegenden Bereich gegen eine elastische Rückstellkraft verbogen bzw. verformt und durch die Rückstellkraft zumindest abschnittweise in Richtung auf die eine Flanschfläche (12) des Sattels vorgespannt wird.

## Claims

1. A calliper disc brake, in particular for commercial vehicles, comprising
a calliper (10) that has a first flange surface (12) with a first function opening (24),
an operating device (14) that has a second flange surface (12) with a second function opening (30) aligned with the first function opening in the installed state, and
a fastening device (36, 38) for fastening the operating device to the calliper,
the function openings (24, 30) serving to couple the operating device to a brake application device,
**characterised in that**
the fastening device is designed to bend or to deform the second flange surface (16) in an area located between the second function opening (30) and the fastening device (36, 38) against an elastic restoring force, and the restoring force pre-stresses the second flange surface (16) in the direction of the first flange surface (12) in at least some sections.

2. The brake according to Claim 1, **characterised in that** the fastening device (36, 38) has a screw.

3. The brake according to Claim 1 or 2, **characterised in that** the fastening device has a bolt and nut.

4. The brake according to any of the preceding claims, **characterised by** two fastening devices (36, 38) which lie on a line with and symmetrical to the first and/or the second function opening (24, 30).

5. The brake according to any of the preceding claims, **characterised by** an intermediate device lying between the calliper (10) and the operating device (14) and which has a third flange surface.

6. The brake according to any of the preceding claims, **characterised in that** the first, the second and/or the third flange surface(s) (12, 16) is/are not level between the fastening device (36, 38) and the function openings (24, 30).

7. The brake according to Claim 6, **characterised in that** the first, the second and/or the third flange surface (12, 16) has/have a step (20, 22) between the fastening device (36, 38) and the function openings (24, 30).

8. The brake according to any of the preceding claims, **characterised by** an insert (47) between two adjacent flange surfaces (12, 16) which extends between the function openings (24, 30) and the fastening device (36, 38), but is positioned a distance (A) away from the fastening device.

9. The brake according to any of the preceding claims, **characterised by** a sealing device (42) for sealing the first and/or the second function opening (24, 30).

10. The brake according to any of the preceding claims, **characterised by** two or more fastening devices (36, 38).

11. The brake according to Claim 10, **characterised in that** the second function opening (30) lies in the middle between two fastening devices (36, 38).

12. The brake according to any of the preceding claims, **characterised in that** the operating device (14) is disposed in an axial or radial position relative to the brake disc.

13. The brake according to any of the preceding claims, **characterised in that** at least the part (18) of the operating device (14) bent against an elastic restoring force in the installed state is a deep drawn part made of sheet metal.

14. The calliper of a brake comprising a first flange surface (12) that is not level between fastening openings (26, 28) and a function opening (24) of the calliper and being configured such that when the operating device is fastened to the calliper a flange surface (16) of an operating device is bent or deformed in an area located between a function opening (30) of the operating device and the fastening openings against an elastic restoring force and is pre-stressed by the restoring force in the direction of the flange surface (16) of the operating device, at least in some sections.

15. The operating device of a brake comprising a fastening device, **characterised in that** a flange surface (16) of the operating device is not level between a function opening (30) of the operating device and the fastening device (36, 38) and is configured such that when the operating device is fastened to a calliper (10) it is bent or deformed in an area located between the function opening (30) and the fastening device against an elastic restoring force and pre-stressed by the restoring force in the direction of the one flange surface (12) of the calliper at least in some sections.

## Revendications

1. Frein à disque à étrier, notamment pour véhicule utilitaire, comportant :
un étrier (10) présentant une première surface de bride (12) comportant une première ouverture fonctionnelle (24),
un dispositif d'actionnement (14) présentant une deuxième surface de bride (16) comportant une deuxième ouverture fonctionnelle (30) de niveau avec la première ouverture fonctionnelle à l'état monté, et
un dispositif de fixation (36, 38) destiné à fixer le dispositif d'actionnement à l'étrier, dans lequel :
les ouvertures fonctionnelles (24, 30) servent à coupler le dispositif d'actionnement à un dispositif de serrage,
**caractérisé en ce que**
le dispositif de fixation est conçu pour plier ou déformer la deuxième surface de bride (16) dans une zone située entre la deuxième ouverture fonctionnelle (30) et le dispositif de fixation (36, 38) contre une force de rappel élastique, et la force de rappel précontraint la deuxième surface de bride (16) au moins par parties en direction de la première surface de bride (12).

2. Frein selon la revendication 1, **caractérisé en ce que** le dispositif de fixation (36, 38) présente une vis.

3. Frein selon la revendication 1 ou 2, **caractérisé en ce que** le dispositif de fixation présente un écrou.

4. Frein selon l'une des revendications précédentes, **caractérisé par** deux dispositifs de fixation (36, 38) situés dans l'alignement des première et deuxième ouvertures fonctionnelles (24, 30) et symétriquement à celles-ci.

5. Frein selon l'une des revendications précédentes, **caractérisé par** un dispositif intermédiaire situé entre l'étrier (10) et le dispositif d'actionnement (14) et présentant une troisième surface de bride.

6. Frein selon l'une des revendications précédentes, **caractérisé en ce que** la première, la deuxième et/ou la troisième surface de bride (12, 16) entre le dispositif de fixation (36, 38) et les ouvertures fonctionnelles (24, 30) ne sont pas planes.

7. Frein selon la revendication 6, **caractérisé en ce que** la première, la deuxième et/ou la troisième surface de bride (12, 16) présentent un gradin (20, 22) entre le dispositif de fixation (36, 38) et les ouvertures fonctionnelles (24, 30).

8. Frein selon l'une des revendications précédentes, **caractérisé par** un insert (47), disposé entre deux surfaces de bride (12, 16) voisines, qui se prolonge entre les ouvertures fonctionnelles (24, 30) et le dispositif de fixation (36, 38), avec toutefois un certain écart (A) par rapport au dispositif de fixation.

9. Frein selon l'une des revendications précédentes, **caractérisé par** un dispositif de joint (42) servant à étanchéifier la première et/ou la deuxième ouverture fonctionnelle (24, 30).

10. Frein selon l'une des revendications précédentes, **caractérisé par** au moins deux dispositifs de fixation (36, 38).

11. Frein selon la revendication 10, **caractérisé en ce que** la deuxième ouverture fonctionnelle (30) est centrée entre deux dispositifs de fixation (36, 38).

12. Frein selon l'une des revendications précédentes, **caractérisé en ce que** le dispositif d'actionnement (14) est disposé en position axiale ou radiale par rapport au disque de frein.

13. Frein selon l'une des revendications précédentes, **caractérisé en ce qu'**au moins la partie (18) du dispositif d'actionnement (14) qui est pliée à l'état monté contre une force de rappel élastique consiste en une partie emboutie en tôle.

14. Étrier d'un frein comportant une première surface de bride (12) entre les ouvertures de fixation (26, 28) et une ouverture fonctionnelle (24) de l'étrier qui n'est pas plane et est conçue de manière qu'une surface de bride (16) d'un dispositif d'actionnement, lors de la fixation du dispositif d'actionnement sur l'étrier, soit pliée ou déformée dans une zone située entre une ouverture fonctionnelle (30) du dispositif d'actionnement et les ouvertures de fixation contre une force de rappel élastique, et soit précontrainte par la force de rappel au moins par parties en direction de la surface de bride (16) du dispositif d'actionnement.

15. Dispositif d'actionnement d'un frein comportant un dispositif de fixation, **caractérisé en ce qu'**une surface de bride (16) du dispositif d'actionnement entre une ouverture fonctionnelle (30) du dispositif d'actionnement et le dispositif de fixation (36, 38) n'est pas plane et est conçue de manière que, lors de la fixation du dispositif d'actionnement sur un étrier (10), elle soit pliée ou déformée dans une zone située entre l'ouverture fonctionnelle (30) et le dispositif de fixation contre une force de rappel élastique, et soit précontrainte par la force de rappel au moins par parties en direction d'une surface de bride (12) de l'étrier.
